# EUROPÄISCHE PATENTANMELDUNG

(11) **EP 1 754 950 A1**
(43) Veröffentlichungstag der Anmeldung: **21.02.2007**
(21) Anmeldenummer: 06015303.8
(22) Anmeldetag: 22.07.2006
(51) Int. Cl.: G01B 5/008, G01B 7/008

(54) **Vorrichtung und Verfahren zum Bewegen eines Mess- oder Arbeitskopfes**

(30) Priorität: 17.08.2005 DE 102005040223
(71) Anmelder: Carl Zeiss Industrielle Messtechnik GmbH, 73447 Oberkochen (DE)
(72) Erfinder: Piwek, Volker, 28201 Bremen (DE); Behrmann, Thomas, 28213 Bremen (DE); Henkel, Lars, 28203 Bremen (DE); Höft, Daniel, 28213 Bremen (DE); Eckner, Felix, 28279 Bremen (DE); Harkensee, Nils, 27711 Osterholz-Scharmbeck (DE); Haberland, Marc Boris, 28865 Lilienthal (DE); Ament, Christoph, 79108 Freiburg (DE)
(74) Vertreter: Duhme, Torsten

(57) **Zusammenfassung**

Eine Vorrichtung, insbesondere ein Koordinatenmessgerät, besitzt eine Antriebsmechanik zum Verfahren eines Mess- oder Arbeitskopfes und einen aktiven Schwingungstilger zum Unterdrücken einer Schwingbewegung des Mess- oder Arbeitskopfes. Der aktive Schwingungstilger beinhaltet eine eigenständig bewegbare Masse und eine Regelschaltung, die die Masse gegenläufig zu der Schwingbewegung bewegt. Gemäß einem Aspekt der Erfindung ist die Masse (38) weitgehend unbedämpft gelagert und es ist ein Rückstellmechanismus (56) vorgesehen, der dazu ausgebildet ist, die Masse (38) im Bereich einer Mittelpunktlage zu halten.

## Beschreibung

Die vorliegende Erfindung betrifft eine Vorrichtung, insbesondere ein Koordinatenmessgerät, mit einer Antriebsmechanik zum Verfahren eines Mess- oder Arbeitskopfes und mit einem aktiven Schwingungstilger zum Unterdrücken einer Schwingbewegung des Mess- oder Arbeitskopfes, wobei der aktive Schwingungstilger eine bewegbare Masse und eine Regelschaltung beinhaltet, die die Masse gegenläufig zu der Schwingbewegung bewegt.

Die Erfindung betrifft außerdem ein Verfahren zum Bewegen eines Mess- oder Arbeitskopfes mit Hilfe einer Antriebsmechanik, insbesondere zum Verfahren eines Tastkopfes an einem Koordinatenmessgerät, wobei eine Schwingbewegung des Mess- oder Arbeitskopfes unterdrückt wird, indem eine Masse gegenläufig zu der Schwingbewegung bewegt wird.

Eine solche Vorrichtung und ein solches Verfahren sind aus DE 40 01 981 A1 bekannt.

Ein Koordinatenmessgerät ist ein Gerät mit einem Messkopf (häufig als Tastkopf bezeichnet), der mit Hilfe einer geeigneten Antriebsmechanik zwei- oder dreidimensional im Raum verfahren werden kann. Eingesetzt werden Koordinatenmessgeräte, um geometrische Parameter (Längenmaße, Durchmesser, Winkel und anderes) oder sogar die gesamte Raumform eines Messobjekts zu vermessen. Das Messobjekt wird dazu im Messvolumen des Koordinatenmessgerätes angeordnet, und der Messkopf wird an verschiedene Messpositionen an dem Messobjekt verfahren. Aus der Stellung des Messkopfes im Messvolumen können dann Raumkoordinaten der Messpunkte bestimmt werden, und aus diesen lassen sich die geometrischen Parameter und/oder die Raumform bestimmen.

Die vorliegende Erfindung wird bevorzugt bei solchen Koordinatenmessgeräten eingesetzt, um die Messgeschwindigkeit und die Messgenauigkeit zu erhöhen. Die Erfindung ist hierauf jedoch nicht beschränkt und sie kann beispielsweise auch bei Werkzeugmaschinen und anderen Vorrichtungen eingesetzt werden, bei denen ein Mess- oder Arbeitskopf mit hoher Genauigkeit in einem Raumvolumen verfahren wird.

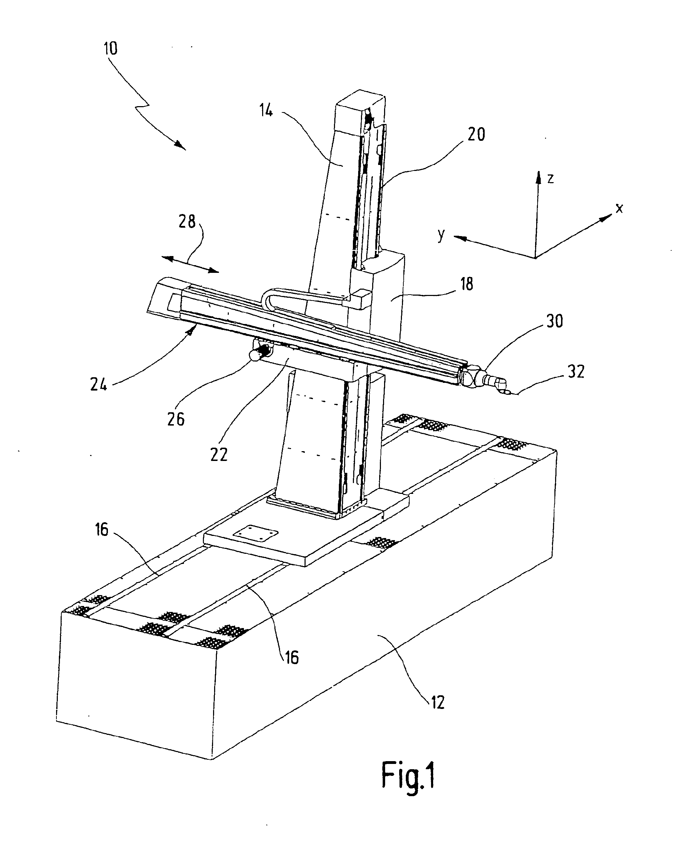

Es ist leicht einzusehen, dass die dynamischen Prozesse beim Verfahren des Mess- oder Arbeitskopfes zu Schwingungen im mechanischen Aufbau des Gerätes führen können. Bei einem Horizontalarm-Koordinatenmessgerät, dessen Aufbau weiter unten anhand Fig. 1 näher erläutert ist, hat eine Bewegung des Messkopfes entlang der X-Achse in aller Regel eine Schwingbewegung des Messkopfes um die senkrechte Z-Achse zur Folge. Ein Verfahren des Messkopfes entlang der Z-Achse kann eine Schwingbewegung des Messkopfes in der Z-Y-Ebene auslösen. Die Amplitude und Frequenz der Schwingbewegung kann in diesen Fällen von der jeweiligen Achsposition des Koordinatenmessgerätes abhängen.

Die Schwingbewegungen des Tastkopfes können zu Fehlmessungen führen (beispielsweise so genannte Luftantastungen) und sie können gültige Messwerte verfälschen. Es gibt daher eine Vielzahl von Vorschlägen, um die Schwingbewegungen des Messkopfes zu reduzieren und/oder schwingungsbedingte Messfehler zu minimieren. Dies beinhaltet Maßnahmen, um die Geschwindigkeit des Messkopfes beim Verfahren zu begrenzen. Derartige Maßnahmen wirken sich jedoch nachteilig auf die Zeitdauer aus, die für einen Messvorgang benötigt wird.

Aus EP 1 429 109 A2 sind mehrere Verfahren und Vorrichtungen zur Schwingungsdämpfung bei einem Koordinatenmessgerät bekannt. Zum Teil wird dabei eine Regelschaltung eingesetzt. In einem Ausführungsbeispiel schlägt EP 1 429 109 A2 vor, Schwingbewegungen zu erfassen und in die Antriebsregelung einzukoppeln, so dass die Antriebsregelung in Abhängigkeit von den erfassten Schwingungen erfolgt. Mit anderen Worten wird hiernach der Messkopf so verfahren, dass Schwingungen möglichst reduziert werden. Dieser Vorschlag kann jedoch dazu führen, dass sich die Zeitdauer für die Durchführung eines komplexen Messvorgangs erhöht. Außerdem lassen sich mit dieser Vorgehensweise nicht alle möglichen Schwingbewegungen des Messkopfes einschließlich von fremderregten Schwingbewegungen minimieren.

Aus DE 43 42 312 A1 ist ein Verfahren bekannt, um schwingungsbedingte Messfehler bei einem Koordinatenmessgerät rechnerisch zu korrigieren. Mit diesem Verfahren lassen sich Messfehler allerdings nur so weit korrigieren, wie die tatsächlich auftretenden Schwingungen dem Korrekturmodell entsprechen.

Aus der eingangs genannten DE 40 01 981 A1 ist ein Koordinatenmessgerät mit einem aktiven Schwingungstilger bekannt. Der aktive Schwingungstilger beinhaltet eine bewegbare Masse, die am freien Ende des Messarms an der Schnittstelle zum Messkopf angeordnet ist. Die bewegbare Masse kann mit Hilfe eines Reglers und eines geeigneten Linearantriebes gegenläufig zu der Schwingbewegung beschleunigt werden. Zusätzlich ist in den dargestellten Ausführungsbeispielen vorgesehen, dass die bewegbare Masse über eine viskose Flüssigkeit bedämpft wird. Mit einem solchen aktiven Schwingungstilger lassen sich Schwingungen des Messarms aufgrund der von außen zugeführten Energie wirksamer und vor allem schneller unterdrücken als mit einem passiven, allein auf Reibung basierenden System.

Aus EP 0 391 130 A1 ist ebenfalls ein Koordinatenmessgerät mit aktivem Schwingungstilger bekannt. Auch in diesem Fall beinhaltet der Schwingungstilger eine bewegbare Masse, die mit Hilfe eines Reglers und eines Aktors in eine Gegenbewegung zu der Schwingbewegung versetzt wird. Zusätzlich wird die bewegbare Masse auch hier mit einem Viskosedämpfer bedämpft.

Es hat sich gezeigt, dass ein aktiver Schwingungstilger mit einer bewegten Masse grundsätzlich gut geeignet ist, um sowohl Eigenschwingungen des Koordinatenmessgerätes (allgemeiner der Vorrichtung) als auch fremdinduzierte Schwingungen zu unterdrücken. Der Erfolg der Schwingungskompensation hängt jedoch entscheidend davon ab, wie schnell und exakt die Bewegungen der Masse an die Schwingbewegungen des Koordinatenmessgerätes angepasst werden können. Es hat sich gezeigt, dass die bislang bekannten Vorschläge nicht optimal sind. Es verbleibt daher der Wunsch nach einem aktiven Schwingungstilger für ein Koordinatenmessgerät oder eine vergleichbare Vorrichtung, der eine schnelle und möglichst gleichmäßige Schwingungsdämpfung über einen großen Arbeitsbereich hinweg ermöglicht.

Dementsprechend ist es eine Aufgabe der vorliegenden Erfindung, ein Verfahren und eine Vorrichtung anzugeben, mit denen sich Schwingbewegungen eines Mess- oder Arbeitskopfes über einen großen Arbeitsbereich hinweg kostengünstig kompensieren oder zumindest reduzieren lassen.

Diese Aufgabe wird nach einem Aspekt der Erfindung durch eine Vorrichtung und ein Verfahren der eingangs genannten Art gelöst, bei denen die Masse weitgehend unbedämpft gelagert ist und bei denen ein Rückstellmechanismus vorgesehen ist, der dazu ausgebildet ist, die Masse im Bereich einer Mittelpunktlage zu halten.

Bei der neuen Vorrichtung und dem neuen Verfahren ist die bewegbare Masse so gelagert, dass der Aktor die Masse weitgehend frei von bzw. nur mit minimalen Gegenkräften bewegen kann. Eine "passive Komponente" der Schwingungstilgung wird soweit wie möglich vermieden. Natürlich ist in realen Systemen stets eine gewisse Luft- und Lagerreibung vorhanden, die sich nicht vollständig eliminieren lässt. Die bekannten Vorrichtungen und Verfahren mit aktivem Schwingungstilger schlagen darüber hinaus jedoch eine bewusste zusätzliche Dämpfung der bewegbaren Masse, beispielsweise in Form einer Viskosedämpfung, vor. Auf diese zusätzliche ("passive") Dämpfung verzichtet die vorliegende Erfindung. Im Gegenteil, in den bevorzugten praktischen Ausführungen der Erfindung wird versucht, die bewegbare Masse so reibungsfrei wie möglich zu lagern. Die neue Vorrichtung und das neue Verfahren beruhen daher auf der Idee, dass sich die Masse so eigenständig und frei wie möglich bewegen kann.

Die unbedämpfte Lagerung der Masse besitzt den Vorteil, dass die Regelschaltung die Bewegungen der Masse schneller und genauer einstellen kann. Insbesondere wird verhindert, dass die Regelschaltung in einen Betrieb kommt, in dem sie gegen die Dämpfung arbeiten muss, was die Wirksamkeit der aktiven Schwingungstilgung erheblich beeinträchtigen kann.

Der Rückstellmechanismus sorgt dafür, dass die Masse trotz der fehlenden Bedämpfung stets in einem sinnvollen Arbeitsbereich gehalten wird. Dadurch kann der neue Schwingungstilger Schwingbewegungen der Vorrichtung dauerhaft über einen großen Frequenzbereich hinweg kompensieren. Außerdem kann die Kompensation sehr einfach an verschiedene Vorrichtungen mit unterschiedlichem mechanischen Aufbau angepasst werden, und sie deckt einen großen räumlichen Arbeitsbereich, d.h. verschiedene Raumpositionen des Mess- oder Arbeitskopfes, sehr gut ab.

Mit Hilfe dieser neuen aktiven Schwingungstilgung ist es möglich, ein Koordinatenmessgerät ohne schwingungsgedämpften Unterbau zu betreiben. Hierdurch werden die Installations- und Betriebskosten spürbar reduziert. Andererseits lassen sich Schwingbewegungen über ein breites Frequenzspektrum hinweg sehr gut kompensieren. Infolge dessen kann die Messzeit für die Durchführung von Messungen an einem Messobjekt minimiert werden.

Die oben genannte Aufgabe ist daher vollständig gelöst.

In einer bevorzugten Ausgestaltung beinhaltet die Regelschaltung zumindest zwei Regelkreise, wobei ein erster Regelkreis dazu ausgebildet ist, die Masse gegenläufig zu der Schwingbewegung zu bewegen, und wobei ein zweiter Regelkreis den Rückstellmechanismus bildet. Mit anderen Worten ist der zweite Regelkreis dazu ausgebildet, die Masse im Bereich der Mittelpunktlage zu halten. Die Bewegung der Masse wird mit Hilfe von zwei Regelkreisen eingestellt.

In dieser Ausgestaltung steuern die neue Vorrichtung und das neue Verfahren die bewegbare Masse also unter zwei Gesichtspunkten an. Zum einen wird die bewegbare Masse mit dem ersten Regelkreis in eine Gegenbewegung gebracht, die die Schwingbewegung des Mess- oder Arbeitskopfes kompensiert. Außerdem stabilisiert ein zweiter Regelkreis die bewegbare Masse auch in der gegenläufigen Bewegung um eine optimale Mittelpunktlage. Mit Hilfe dieses zweiten Regelkreises werden Drifterscheinungen kompensiert, die aufgrund der reibungsarmen (im Idealfall reibungslosen) Lagerung der Masse auftreten können. Mit dieser zweistufigen Regelung ist es möglich, auf unterschiedliche Schwingbewegungen des Mess- oder Arbeitskopfes flexibel zu reagieren, die einerseits von den unterschiedlichen Betriebspositionen des Mess- oder Arbeitskopfes abhängen und andererseits fremdinduziert sein können (beispielsweise Übertragung von Trittschall oder anderen externen Erschütterungen). Die Kombination der beiden Regelkreise, die die Bewegungen der Masse gemeinsam bestimmen, ermöglicht eine gleichmäßig gute Schwingungskompensation über einen weiten räumlichen und spektralen Arbeitsbereich hinweg.

Andererseits lassen sich diese beiden Regelkreise gut miteinander kombinieren, was eine kostengünstige Realisierung ermöglicht. Wie anhand eines bevorzugten Ausführungsbeispiels weiter unten dargestellt ist, ist es ohne weiteres möglich, die beiden Regelkreise derart miteinander zu kombinieren, dass sie auf einen gemeinsamen Aktor einwirken, ohne sich gegenseitig zu stören. Darüber hinaus können für jeden der beiden Regelkreise Standardkomponenten bzw. -verfahren eingesetzt werden, was die praktische Realisierung weiter vereinfacht.

In einer weiteren Ausgestaltung arbeiten der erste und der zweite Regelkreis parallel zueinander.

Alternativ hierzu wäre grundsätzlich auch eine andere Kombination der beiden Regelkreise denkbar, beispielsweise eine kaskadierte Regelung. In der bevorzugten Ausgestaltung können die beiden Regelkreise jedoch weitgehend unabhängig voneinander dimensioniert und realisiert werden, was die praktische Realisierung erleichtert. Besonders bevorzugt ist es, wenn die Stellgrößen der beiden Regelkreise additiv (unter Berücksichtigung von Vorzeichen) überlagert werden und auf diese Weise eine gemeinsame Stellgröße zum Ansteuern eines gemeinsamen Aktors gebildet wird. Eine solche Realisierung ist besonders einfach und kostengünstig, und sie hat sich in praktischen Versuchen als sehr erfolgreich erwiesen.

In einer weiteren Ausgestaltung weisen der erste und der zweite Regelkreis jeweils einen integrierenden Anteil und/oder außerdem eine Zeitkonstanten auf, wobei die Zeitkonstante des zweiten Regelkreises zumindest 10 mal größer ist als die Zeitkonstante des ersten Regelkreises. Vorzugsweise ist die Zeitkonstante des zweiten Regelkreises zumindest um den Faktor 100 und weiter bevorzugt um den Faktor 500 größer als die Zeitkonstante des ersten Regelkreises. In einem besonders bevorzugten Ausführungsbeispiel ist die Zeitkonstante des zweiten Regelkreises etwa um den Faktor 1000 größer als die Zeitkonstante des ersten Regelkreises.

Regelkreise mit einem integrierenden Anteil sind den einschlägigen Fachleuten in Form von PI-Reglern oder PID-Reglern bekannt. Der integrierende Anteil sorgt dafür, dass die Regelabweichung mittel- bis langfristig null wird, d.h. es gibt keine prinzipbedingte Restabweichung. Mit anderen Worten sind Regelkreise mit integrierendem Anteil grundsätzlich in der Lage, den Regelungsprozess zu einem optimalen Ergebnis zu bringen. Wenn sowohl der erste als auch der zweite Regelkreis einen integrierenden Anteil aufweisen, lassen sich hervorragende Ergebnisse bei der Schwingungskompensation erreichen. Darüber hinaus besitzt diese Ausgestaltung den Vorteil, dass die beiden Regelkreise allein aufgrund der unterschiedlichen Zeitkonstanten sehr gut voneinander entkoppelt sind. Der erste Regelkreis reagiert aufgrund seiner relativ kleinen Zeitkonstanten sehr schnell und ist daher gut geeignet, auf wechselnde Schwingbewegungen des Mess- oder Arbeitskopfes zu reagieren. Der zweite Regelkreis reagiert aufgrund seiner großen Zeitkonstanten relativ langsam. Er ist bei den angegebenen Größenverhältnissen jedoch immer noch in der Lage, die bewegte Masse mittel- bis langfristig in ihrem optimalen Arbeitspunkt zu halten. Aufgrund der unterschiedlichen Zeitkonstanten und der damit verbundenen Reaktionsgeschwindigkeiten arbeiten die beiden Regelkreise weitgehend entkoppelt voneinander. Dies trifft insbesondere bei einem typischen Betrieb eines Koordinatenmessgerätes zu, da auf schwingungsinduzierende Beschleunigungen in der Regel Phasen mit gleichförmiger Bewegung oder sogar ein Stillstand folgen. In diesen Phasen kann der "langsame" zweite Regelkreis tätig werden, ohne den "schnellen" ersten Regelkreis zu stören.

In einer weiteren Ausgestaltung weist die Regelschaltung einen gemeinsamen Aktor für den ersten und den zweiten Regelkreis auf, und zwar insbesondere einen elektromagnetischen Aktor, beispielsweise in Form einer Tauchspule, oder einen piezoelektrischen Aktor.

Diese Ausgestaltung ist eine sehr kostengünstige und einfache Realisierung. Darüber hinaus trägt die Verwendung eines gemeinsamen Aktors zu einer Minimierung des Gesamtgewichts des aktiven Schwingungstilgers bei, was im Hinblick auf die Dynamik der Maschine von Vorteil ist. Elektromagnetische Aktoren sind aufgrund ihrer Eigenschaften (Reaktionsgeschwindigkeit, Hub, thermische Belastung u.a.) besonders gut für die vorliegende Anwendung geeignet. Piezoelektrische Aktoren sind aufgrund ihrer Frequenzeigenschaften als Alternative bevorzugt.

In einer weiteren Ausgestaltung beinhalten der erste und der zweite Regelkreis jeweils einen eigenen Regler.

Alternativ hierzu wäre es grundsätzlich denkbar, die Funktionen des ersten und des zweiten Regelkreises mit einem gemeinsamen Regler zu realisieren. Ein solcher Regler müsste jedoch eine sehr komplexe Regelungsfunktion realisieren und wäre entsprechend aufwendig und teuer. Die bevorzugte Ausgestaltung ist demgegenüber einfach und kostengünstig zu realisieren.

In einer weiteren Ausgestaltung beinhaltet der erste Regelkreis einen PID- oder PD-Regler.

Ein PID- oder PD-Regler ist aufgrund seines D-Anteils in der Lage, sehr schnell auf eine Störgröße zu reagieren. Andererseits ist ein PID-Regler aufgrund seines I-Anteils auch in der Lage, langfristig eine Regelabweichung von null zu erreichen. Aufgrund dieser beiden Eigenschaften ist der PID-Regler besonders gut für den ersten Regelkreis geeignet, der eine schnelle Reaktion auf Schwingbewegungen ermöglichen soll. Dieselben Vorteile lassen sich jedoch auch mit einem PD-Regler erreichen, wenn die Regelstrecke insgesamt ein I-Verhalten aufweist. In einem solchen Fall ist die Verwendung eines einfacheren PD-Reglers bevorzugt.

Unabhängig von dem verwendeten Regler beträgt die Zeitkonstante des ersten Regelkreises in einem besonders bevorzugten Ausführungsbeispiel für ein Koordinatenmessgerät in Horizontalarmbauweise, bei dem die bewegte Masse zwischen dem freien Ende des Horizontalarms und dem Tastkopf angeordnet ist, etwa 0,002 Sekunden. Diese Zeitkonstante hat sich in praktischen Versuchen an einem Horizontalarm-Koordinatenmessgerät, wie es weiter unten beschrieben ist, als besonders vorteilhaft erwiesen.

In einer weiteren Ausgestaltung beinhaltet der zweite Regelkreis einen P- oder PI-Regler. Die Zeitkonstante des zweiten Regelkreises beträgt in einem bevorzugten Ausführungsbeispiel etwa 2 Sekunden.

Da der zweite Regelkreis funktionsbedingt langsamer reagieren darf und soll als der erste Regelkreis, ist hier die Verwendung eines P- oder PI-Reglers vorteilhaft. Bevorzugt wird ein P-Regler eingesetzt, wenn die Regelstrecke insgesamt schon einen I-Anteil besitzt. Die Kombination der beiden zuletzt genannten Ausgestaltungen führt zu einer besonders kostengünstigen und effizienten Realisierung.

In einer weiteren Ausgestaltung erhält der erste Regelkreis als Eingangsgröße einen Positionssollwert.

In einem bevorzugten Ausführungsbeispiel ist der Positionssollwert ein Wegsollwert von null, d.h. dass der erste Regelkreis die bewegte Masse auf die anfängliche Ruheposition ausregelt. Die Verwendung eines Positionssollwertes ermöglicht eine sehr einfache und wirksame Realisierung des ersten Regelkreises, da sich die Schwingbewegungen des Mess- oder Arbeitskopfes sehr gut mit Hilfe von Beschleunigungssensoren erfassen lassen. Das Beschleunigungssignal dieser Sensoren kann durch eine zweifache Integration in ein Wegsignal umgewandelt werden.

In einer weiteren Ausgestaltung beinhaltet der erste Regelkreis einen Beschleunigungssensor, der ein für die Schwingbewegung repräsentatives Beschleunigungssignal erzeugt, sowie einen zweistufigen Integrator, der aus dem Beschleunigungssignal ein Wegsignal erzeugt.

Diese Ausgestaltung trägt zu der kostengünstigen und effizienten Realisierung bei. Beschleunigungssensoren sind als Standardbauelemente kommerziell erhältlich, und sie können eine Schwingbewegung des Mess- oder Arbeitskopfes sehr gut repräsentieren. Darüber hinaus lassen sich die Ausgangssignale eines Beschleunigungssensors in Verbindung mit der oben genannten Ausgestaltung sehr einfach und effizient verarbeiten.

In einer weiteren Ausgestaltung ist der zweistufige Integrator mit Hilfe von zwei PT₁-Gliedern realisiert.

Ein PT₁-Glied ist ein Schaltungsbestandteil, der ein so genanntes PT₁-Verhalten aufweist. Das PT₁-Verhalten ist einschlägigen Fachleuten auf dem Gebiet der Regelungstechnik hinreichend bekannt. Diese Fachleute erkennen, dass ein PT₁-Glied kein idealer Integrator ist. PT₁-Glieder können daher die Umwandlung eines Beschleunigungssignals in ein Wegsignal nicht exakt vornehmen. Ein PT₁-Glied besitzt jedoch für hohe Frequenzen ein annähernd integrierendes Verhalten und darüber hinaus - im Gegensatz zu einem echten Integrator - einen Grenzwert. Daher lassen sich Offsetprobleme durch Verwendung von PT₁-Gliedern als Integratoren vermeiden. Die praktische Realisierung ist einfach und sie liefert gute Ergebnisse.

In einer besonders bevorzugten Ausgestaltung beinhaltet der zweite Regelkreis einen optischen Positionssensor.

Die Verwendung eines optischen Positionssensors zum Bestimmen der Istposition der bewegbaren Masse liefert sehr gute Ergebnisse. Außerdem werden bei Verwendung eines optischen Positionssensors Störeinflüsse vermieden, die vor allem bei Koordinatenmessgeräten im Bereich des Tastkopfes zu Problemen führen könnten.

In einer weiteren Ausgestaltung erhält der zweite Regelkreis als Eingangsgröße eine definierte Sollposition, insbesondere in Form eines digitalen oder analogen Spannungssignals.

Die Verwendung einer definierten Sollposition als Eingangsgröße für den zweiten Regelkreis ermöglicht eine sehr einfache und kostengünstige Realisierung, insbesondere wenn der zweite Regelkreis einen optischen Positionssensor zum Bestimmen der Istposition der bewegten Masse aufweist.

In einer weiteren Ausgestaltung der Erfindung beinhaltet der Rückstellmechanismus ein Federelement mit einer Federkonstanten, die zusammen mit der bewegbaren Masse eine Schwingfrequenz definiert, die klein ist gegenüber den Frequenzen der Schwingbewegung der Vorrichtung.

Auch mit dieser Ausgestaltung kann die Mittelpunktlage der bewegbaren Masse in einem optimalen Arbeitsbereich gehalten werden, und zwar in Ergänzung oder anstelle des zweiten Regelkreises. Vorteilhafterweise ist die Federkonstanten des Federelements so klein, dass die Eigenfrequenz des Federsystems aus dem Federelement und der bewegbaren Masse deutlich kleiner ist als die Schwingfrequenzen, die mit dem neuen aktiven Schwingungstilger kompensiert werden. In einer bevorzugten Ausgestaltung ist die Eigenfrequenz des Federsystems etwa um den Faktor 10 kleiner als die zu kompensierenden Schwingfrequenzen. Das Federelement beeinträchtigt die Bewegungen der bewegbaren Masse in dieser Ausgestaltung kaum, d.h. die Masse ist immer noch weitgehend unbedämpft gelagert. Besonders vorteilhaft ist diese Ausgestaltung zum Kompensieren von Schwingbewegungen in der z-Achse, da die Gewichtskraft der bewegbaren Masse in diesem Fall sehr einfach und effizient mit dem Federelement abgestützt werden kann. Das Federelement kann eine mechanische Feder, beispielsweise eine Schraubenfeder, sein oder auch pneumatisch oder hydraulisch realisiert sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Horizontalarm-Koordinatenmessgerät, bei dem die vorliegende Erfindung besonders wirkungsvoll eingesetzt werden kann,
- Fig. 2: eine vereinfachte, schematische Darstellung zur Erläuterung eines aktiven Schwingungstilgers im Sinne der vorliegenden Erfindung,
- Fig. 3: ein Prinzipschaltbild der Regelschaltung, die gemäß der vorliegenden Erfindung bei dem Koordinatenmessgerät aus Fig. 1 zum Einsatz kommt,
- Fig. 4: einen ersten und einen zweiten Regelkreis, die in einem bevorzugten Ausführungsbeispiel der Erfindung in der Regelschaltung aus Fig. 3 zum Einsatz kommen,
- Fig. 5: die Lagerung der bewegbaren Masse des neuen aktiven Schwingungstilgers gemäß einem bevorzugten Ausführungsbeispiel, und
- Fig. 6: ein weiteres Ausführungsbeispiel für die Lagerung der bewegbaren Masse des neuen aktiven Schwingungstilgers.

In Fig. 1 ist ein Koordinatenmessgerät, bei dem die vorliegende Erfindung vorteilhaft eingesetzt werden kann, in seiner Gesamtheit mit der Bezugsziffer 10 bezeichnet.

Das Koordinatenmessgerät 10 ist hier in Horizontalarm-Bauweise dargestellt, was ein bevorzugtes Ausführungsbeispiel für die vorliegende Erfindung darstellt, da die Schwingbewegungen des Gerätes hier in Abhängigkeit von der Geräteposition besonders stark variieren können. Die Erfindung ist jedoch nicht auf Horizontalarmmessgeräte beschränkt. Sie kann auch bei Koordinatenmessgeräten in Brücken- oder Portalbauweise oder bei einem anderen Achsaufbau eingesetzt werden. Darüber hinaus sei der Vollständigkeit halber nochmals darauf hingewiesen, dass die Erfindung nicht nur bei Koordinatenmessgeräten, sondern auch bei anderen Vorrichtungen angewendet werden kann, bei denen ein Mess- oder Arbeitskopf (beispielsweise eine Werkzeugaufnahme) entlang von Raumachsen verfahren werden kann.

Das Koordinatenmessgerät 10 besitzt eine Basis 12, auf der ein Ständer 14 angeordnet ist. Der Ständer 14 sitzt auf Schienen 16 und kann entlang der Schienen 16 (in X-Richtung) verfahren werden. Ein geeigneter Antrieb (hier nicht dargestellt) kann beispielsweise am Fuß des Ständers 14 angeordnet sein.

An dem Ständer 14 ist ein Schlitten 18 angeordnet, der entlang von Schienen 20 in vertikaler Richtung (Z-Achse) verfahren werden kann. Der Schlitten 18 besitzt eine Auflage 22, auf der ein Balken 24 quer zu dem Ständer 14 angeordnet ist. Der Balken 24 kann über einen Antrieb 26, beispielsweise einen Reibradantrieb, in Richtung des Pfeils 28 (Y-Achse) verfahren werden. Am vorderen freien Ende des Balkens 24 ist ein Tastkopf 30 mit einem Taststift 32 angeordnet. Es versteht sich allerdings, dass die Erfindung auch bei Koordinatenmessgeräten eingesetzt werden kann, bei denen ein Messpunkt berührungslos angefahren wird. Die Erfindung ist also nicht auf Koordinatenmessgeräte mit Tastköpfen im engeren Sinne beschränkt.

Der Aufbau eines solchen Horizontalarm-Koordinatenmessgerätes ist grundsätzlich bekannt. Im Unterschied zum Stand der Technik besitzt das Koordinatenmessgerät 10 aus Fig. 1 jedoch einen aktiven Schwingungstilger, der nachfolgend anhand der weiteren Figuren erläutert wird.

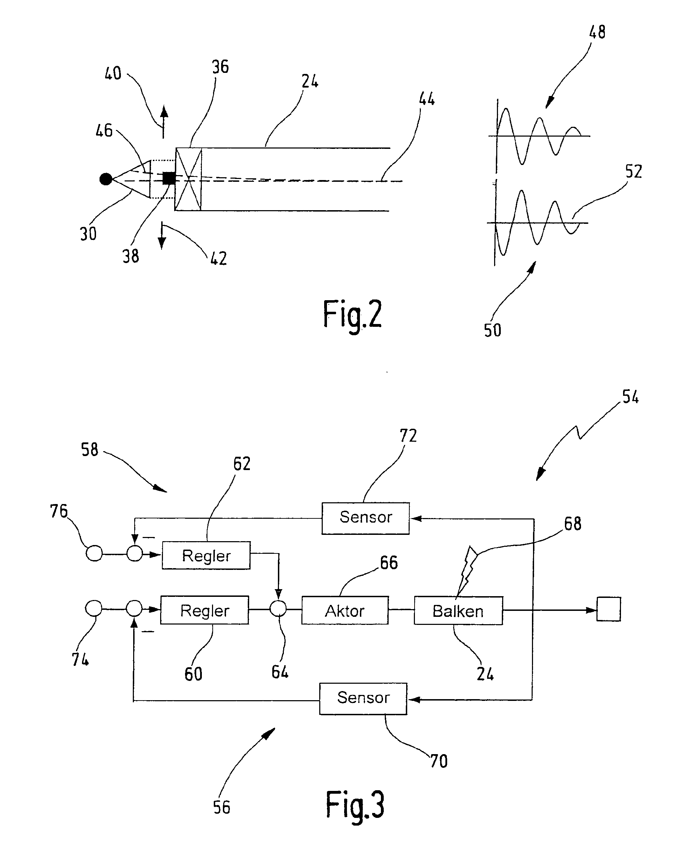

In Fig. 2 ist der Balken 24 des Koordinatenmessgerätes 10 schematisch nochmals dargestellt. Gleiche Bezugszeichen bezeichnen dabei die selben Elemente wie zuvor.

Am vorderen freien Ende des Balkens 24 sitzt ein Flansch 36, an dem eine bewegbare Masse 38 angeordnet ist. Die Masse 38 kann sich relativ zu dem Balken 24 (eingeständig) in Richtung der Pfeile 40, 42 bewegen. Hierdurch kann eine Schwingbewegung (Bezugsziffer 48) des Balkens 24 um seine Mittelachse 44 kompensiert werden. Bei der Bezugsziffer 46 ist eine Auslenkung des Balkens 24 (bzw. des Tastkopfes 30) relativ zu der Mittelachse 44 schematisch dargestellt. Die konstruktionstechnischen Details zur Lagerung der Masse 38 sind hier nicht näher dargestellt. Beispielsweise kann die Masse 38 in einer Weise am Balken 24 aufgehängt sein, wie sie in der eingangs genannten DE 40 01 981 A1 beschrieben ist. Bevorzugt ist die bewegbare Masse 38 zusammen mit ihrem Antrieb (hier nicht dargestellt) und zumindest einem Teil der Regelschaltung in einem modulartigen Gehäuse angeordnet, das zwischen der Tastkopfaufnahme und dem freien Ende des Balkens 24 befestigt werden kann. In diesem Fall enthält das Gehäuse (hier nicht dargestellt) vorzugsweise auch den oder die Sensoren zur Aufnahme der Istgrößen für den ersten und zweiten Regelkreis.

Im rechten Teil der Fig. 2 ist bei der Bezugsziffer 48 eine Schwingbewegung dargestellt, die der Tastkopf 30 bzw. der Balken 24 infolge einer Beschleunigung oder aufgrund von Fremdeinflüssen ausführt. Wie leicht einzusehen ist, kann die Schwingbewegung 48 bei dem Koordinatenmessgerät 10 sowohl in der XY-Ebene als auch in der YZ-Ebene liegen. Darüber hinaus ist grundsätzlich auch eine Schwingbewegung in der XZ-Ebene möglich. Bevorzugt erfolgt die aktive Schwingungskompensation für Schwingungen in der XY-Ebene (Rotationen um die Z-Achse) und ergänzend hierzu für Schwingbewegungen in der YZ-Ebene. Diese Schwingbewegungen sind bei einem Koordinatenmessgerät in Horizontalarmbauweise besonders stark ausgeprägt. Es versteht sich, dass die Darstellung in Fig. 2 nur die Schwingbewegung in einer der genannten Ebenen symbolisiert. Für eine Kompensation von Schwingbewegungen in orthogonalen Ebenen sind bevorzugt mehrere Massen 38 vorgesehen, die jeweils nur in der Ebene der Schwingbewegung bewegbar sind.

Bei der Bezugsziffer 50 ist eine Gegenbewegung dargestellt, die gegenläufig zu der Schwingbewegung 48 erfolgt. Die Gegenbewegung 50 symbolisiert die Auslenkungen der Masse 38 in Richtung der Pfeile 40, 41, um die Schwingbewegung 48 zu kompensieren. Bei der Bezugsziffer 52 ist eine Mittelpunktlage der Masse 38 angedeutet, die gemäß der vorliegenden Erfindung mit Hilfe des zweiten Regelkreises weitgehend konstant gehalten wird. Mit anderen Worten sorgt der zweite Regelkreis dafür, dass die Nulllinie der Gegenbewegung 50 nicht in Richtung der Pfeile 40, 42 driftet. Die bewegbare Masse 38 wird also unabhängig von der Gegenbewegung 50 im Bereich der ursprünglichen Mittelpunktlage 52 gehalten.

In Fig. 3 ist eine Regelschaltung, mit der die bewegbare Masse 38 eingestellt wird, in ihrer Gesamtheit mit der Bezugsziffer 54 bezeichnet. Die Regelschaltung 54 besitzt zwei Regelkreise 56, 58. Der ersten Regelkreis 56 beinhaltet einen Regler 60. Der zweite Regelkreis 58 beinhaltet einen Regler 62. Die Ausgänge der Regler 60, 62 sind an einem Summationspunkt 64 zusammengeführt. Das am Summationspunkt 64 zusammengeführte Signal steuert einen Aktor 66, der in einem bevorzugten Ausführungsbeispiel ein elektromagnetischer Antrieb in Form einer Tauchspule ist. Der Aktor 66 wirkt (über die Masse 38) auf den Balken 24 (vgl. Fig. 1). Außerdem wirkt auf den Balken 24 eine Störgröße, die in Fig. 3 schematisch bei der Bezugsziffer 68 angedeutet ist.

Ein Istzustand des Balkens 24 wird in dem ersten Regelkreis 56 mit Hilfe eines Sensors 70 erfasst. Der Sensor 70 erzeugt ein Istsignal, das in gewohnter Weise von einem Sollwert 74 am Eingang des Reglers 60 subtrahiert wird. Das Differenzsignal (die Regelabweichung) ist das Eingangssignal des Reglers 60.

Parallel dazu wird ein Istsignal über einen zweiten Sensor 72 erfasst. Der zweite Sensor 72 gehört zu dem zweiten Regelkreis 58, und er liefert das Istsignal an den Eingang des zweiten Reglers 62. In gewohnter Weise erhält der Regler 62 ein Differenzsignal (Regelabweichung) aus einem Sollwert 76 und dem Istsignal vom Ausgang des Sensors 72.

Insgesamt enthält die Regelschaltung 54 also einen ersten (schnellen) Regelkreis 56, dessen Hauptaufgabe darin liegt, die bewegbare Masse 38 mit Hilfe des Aktors 66 gegenläufig zu der Schwingbewegung des Balkens 24 zu bewegen. Der zweite (langsame) Regelkreis 58 dient dazu, die bewegbare Masse 38 mit Hilfe des Aktors 66 im Bereich der ursprünglichen Mittelpunktlage 52 zu halten. Auf diese Weise werden Drifteffekte minimiert, und die bewegbare Masse 38 wird stets in einem optimalen Arbeitspunkt gehalten.

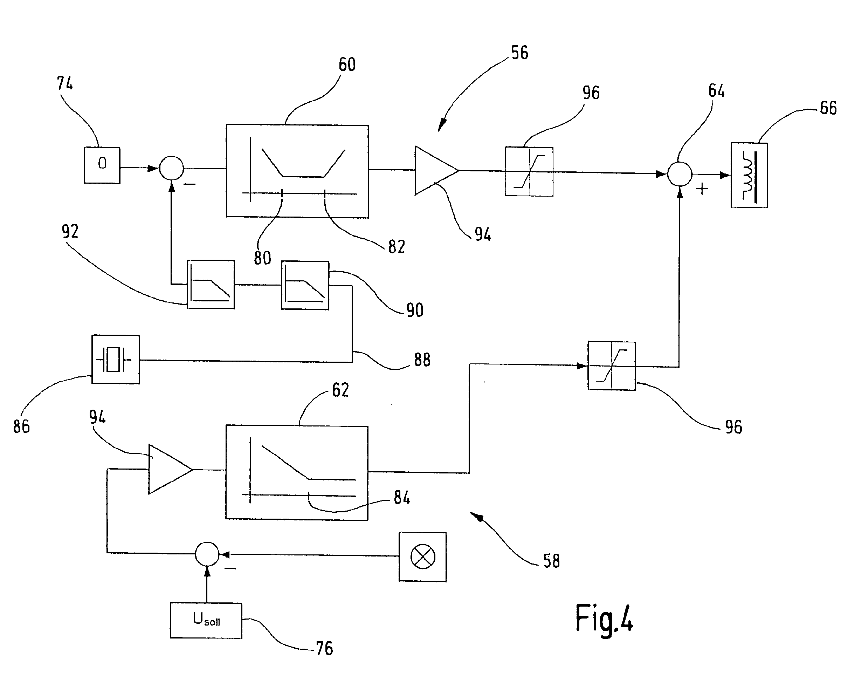

Fig. 4 zeigt den ersten und zweiten Regelkreis 56, 68 in weiteren Details. Gleiche Bezugszeichen bezeichnen dabei dieselben Elemente wie zuvor.

Der Regler 60 des ersten Regelkreises 56 ist in einem bevorzugten Ausführungsbeispiel der Erfindung als PID-Regler ausgebildet. Der PID-Regler ist in Fig. 4 schematisch anhand seines typischen Amplitudengangs dargestellt. Er besitzt einen integrierenden Anteil, der durch eine I-Zeitkonstante charakterisiert ist, einen hier nicht näher erläuterten Proportionalanteil und einen differenzierenden Anteil, der durch eine zweite Zeitkonstante (D-Zeitkonstante) charakterisiert ist. Die I-Zeitkonstante ist in Fig. 4 symbolisch bei der Bezugsziffer 80 angedeutet, die D-Zeitkonstante bei Bezugsziffer 82.

Demgegenüber ist der zweite Regler 62 als PI-Regler ausgebildet. Er besitzt einen proportionalen Anteil und einen integrierenden Anteil, jedoch keinen differenzierenden Anteil. Der integrierende Anteil ist durch eine I-Zeitkonstante charakterisiert, die bei der Bezugsziffer 84 angedeutet ist. In einem bevorzugten Ausführungsbeispiel für ein Koordinatenmessgerät der in Fig. 1 dargestellten Art beträgt die gesamte Zeitkonstante des ersten Reglers 60 etwa 0,002 Sekunden, während die gesamte Zeitkonstante des zweiten Reglers 62 etwa bei 2 Sekunden liegt.

Der erste Regler 60 erhält als Führungsgröße einen Wegsollwert 74, der vorzugsweise Null beträgt. Das Istsignal wird mit Hilfe eines Beschleunigungssensors 86 aufgenommen, der beispielsweise als piezoelektrischer Beschleunigungssensor ausgebildet ist. Um aus dem Beschleunigungssignal 88 am Ausgang des Beschleunigungssensors 86 ein Istsignal zu machen, das von dem Sollwert 74 subtrahiert werden kann, wird das Beschleunigungssignal 88 über zwei PT₁-Glieder 90, 92 geführt. Die PT₁-Glieder 90, 92 haben für höhere Frequenzen ein integrierendes Verhalten und wirken somit als Integrierer. Der im Vergleich zu einem "echten" Doppelintegrierer auftretende Fehler im Übertragungsveralten ist bei den kleinen Zeiten des schnellen Reglers vernachlässigbar klein.

Das Ausgangssignal des Reglers 60 ist über einen Verstärker 94 und einen Begrenzer 96 auf den Summationspunkt 64 geführt.

Der zweite Regelkreis 58 erhält als Sollwert 76 ein konstantes Spannungssignal Uₛₒₗₗ. Von dem Sollwert 76 wird ein Spannungswert subtrahiert, der eine Istposition der bewegbaren Masse 38 repräsentiert. Der Ist-Spannungswert wird mit Hilfe eines Positionssensors 100 bestimmt. In einem bevorzugten Ausführungsbeispiel ist der Positionssensor 100 ein optischer Sensor, der nach dem Triangulationsprinzip arbeitet. Das Ausgangssignal des Reglers 62 wird über einen weiteren Begrenzer 96 auf den Summationspunkt 64 geführt. Vom Summationspunkt 64 aus wird der Aktor 66 angesteuert.

Die Bestimmung der Reglerkonstanten K, Ti und (bei dem ersten Regler 60) Td, kann in an sich bekannter Weise erfolgen, indem die Amplituden- und Phasengänge der Regelstrecke und des Reglers mit Hilfe des Nyquist-Kriteriums ausgelegt werden.

Die in den Figuren 3 und 4 dargestellte Regelschaltung kann in dem Koordinatenmessgerät 10 aus Fig. 1 mehrfach vorhanden sein, um Schwingbewegungen in den unterschiedlichen Ebenen unabhängig voneinander zu kompensieren. Dementsprechend ist dann für jede Schwingungsebene eine bewegbare Masse 38 vorgesehen (hier nicht dargestellt). Alternativ hierzu kann die bewegbare Masse so gelagert sein, dass sie sich in zwei senkrechten Koordinatenachsen bewegen kann, insbesondere also eine Kreisbewegung ausführen kann. Mit einer solchen Masse ist es möglich, die Schwingbewegungen des Koordinatenmessgerätes in zwei Koordinatenrichtungen zu kompensieren. In einfacheren Fällen kann es jedoch genügen, nur die Schwingbewegung des Tastkopfes 30 in der XY-Ebene (Rotation um die Z-Achse) in der erfindungsgemäßen Weise zu kompensieren.

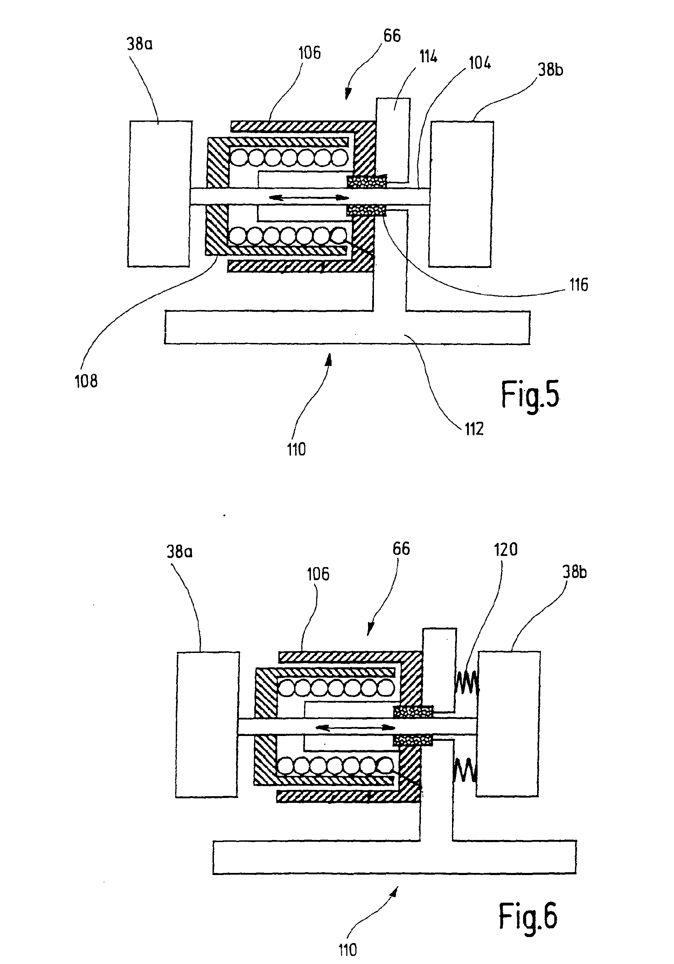

Fig. 5 zeigt eine bevorzugte Realisierung für die Lagerung der bewegbaren Masse 38. Die Masse 38 beinhaltet hier zwei separate Masseteile 38a und 38b, die an den Enden eines Verbindungsstabes 104 angeordnet sind. Zwischen den beiden Masseteilen 38a, 38b ist der Aktor 66 auf dem Stab 104 angeordnet. In dem bevorzugten Ausführungsbeispiel handelt es sich um eine Tauchspule mit einem Spulengehäuse 106 und einem beweglichen Teil 108. Der bewegliche Teil 108 umgibt den Stab 104 etwa konzentrisch, und er ist an dem Stab befestigt, so dass sich der Stab 104 mit den Masseteilen 38a, 38b zusammen mit dem beweglichen Teil 108 bewegen kann. Das Spulengehäuse 106 ist an einem Träger 110 befestigt. In dem bevorzugten Ausführungsbeispiel ist der Träger 110 im Querschnitt T-förmig mit einer Grundplatte 112 und einem Tragschenkel 114. Das Spulengehäuse ist an dem Tragschenkel 114 befestigt. Der Stab 104 sitzt in einer Lagerbuchse 116, die in einer Öffnung am Tragschenkel 114 angeordnet ist. Die Grundplatte 112 ist dazu ausgebildet, an dem Flansch 36 am freien Ende des Balkens befestigt zu werden. Durch die verteilten Massen 38a, 38b wir eine gleichmäßige Gewichtsverteilung und ein kompakter Aufbau erreicht.

Fig. 6 zeigt ein weiteres Ausführungsbeispiel, in dem gleiche Bezugszeichen dieselben Elemente bezeichnen wie zuvor. Der mechanische Aufbau der bewegbaren Masse 38a, 38b ist der gleiche wie in dem Ausführungsbeispiel der Fig. 5. Im Unterschied dazu ist der Masseteil 38b hier jedoch über ein Federelement 120 gegen den Tragschenkel 114 abgestützt. Das Federelement 114 besitzt eine sehr kleine Federkonstante ("weiche" Feder mit flacher Federkennlinie). Die Eigenfrequenz des Schwingungssystems aus dem Federelement 120 und den Masseteilen 38a, 38b inklusive Stabe 104 und darauf angeordnetem Teil 108 ist sehr viel kleiner (vorzugsweise um den Faktor 10) als die Frequenzen der zu kompensierenden Schwingbewegungen. Dadurch lässt sich die Masse 38 eigenständig bewegen. Lediglich die Mittelpunkt- bzw. Ruhelage der Masse 38 wird mit dem Federelement 120 eingestellt. Dieses Ausführungsbeispiel mit dem Federelement 120 ist besonders bevorzugt, wenn der Schwingungstilger aus Fig.6 in einer um 90° verdrehten Einbaulage verwendet wird, um Schwingbewegungen in der z-Richtung zu kompensieren.

## Patentansprüche

1. Vorrichtung, insbesondere Koordinatenmessgerät, mit einer Antriebsmechanik (14, 18, 24) zum Verfahren eines Mess- oder Arbeitskopfes (30) und mit einem aktiven Schwingungstilger zum Unterdrücken einer Schwingbewegung (48) des Mess- oder Arbeitskopfes (30), wobei der aktive Schwingungstilger eine bewegbare Masse (38) und eine Regelschaltung (54) beinhaltet, die die Masse (38) gegenläufig zu der Schwingbewegung (48) bewegt, **dadurch gekennzeichnet, dass** die Masse (38) weitgehend unbedämpft gelagert ist und dass ein Rückstellmechanismus (56;) vorgesehen ist, der dazu ausgebildet ist, die Masse (38) im Bereich einer Mittelpunktlage (52) zu halten.

2. Vorrichtung nach Anspruch 1, **dadurch gekennzeichnet, dass** die Regelschaltung (54) zumindest zwei Regelkreise (56, 58) beinhaltet, wobei ein erster Regelkreis (56) dazu ausgebildet ist, die Masse (38) gegenläufig zu der Schwingbewegung (48) zu bewegen, und wobei ein zweiter Regelkreis (58) den Rückstellmechanismus bildet.

3. Vorrichtung nach Anspruch 2, **dadurch gekennzeichnet, dass** der erste und der zweite Regelkreis (56, 58) parallel zueinander arbeiten.

4. Vorrichtung nach Anspruch 2 oder 3, **dadurch gekennzeichnet, dass** der erste und der zweite Regelkreis (56, 58) jeweils eine Zeitkonstante (80, 84) aufweisen, wobei die Zeitkonstante (84) des zweiten Regelkreises (58) zumindest 10 mal größer ist als die Zeitkonstante (80) des ersten Regelkreises (56), vorzugsweise zumindest 100 mal größer, und weiter bevorzugt zumindest 500 mal größer.

5. Vorrichtung nach einem der Ansprüche 2 bis 4, **dadurch gekennzeichnet, dass** die Regelschaltung (54) einen gemeinsamen Aktor (66) für den ersten und den zweiten Regelkreis (56, 58) aufweist, insbesondere einen elektromagnetischen oder einen piezoelektrischen Aktor.

6. Vorrichtung nach einem der Ansprüche 2 bis 5, **dadurch gekennzeichnet, dass** der erste und der zweite Regelkreis (56, 58) jeweils einen eigenen Regler (60, 62) beinhalten.

7. Vorrichtung nach einem der Ansprüche 2 bis 6, **dadurch gekennzeichnet, dass** der erste Regelkreis (56) einen PD- oder PID-Regler (60) beinhaltet.

8. Vorrichtung nach einem der Ansprüche 2 bis 7, **dadurch gekennzeichnet, dass** der zweite Regelkreis (58) einen P- oder PI-Regler (62) beinhaltet.

9. Vorrichtung nach einem der Ansprüche 2 bis 8, **dadurch gekennzeichnet, dass** der erste Regelkreis (56) als Eingangsgröße (74) einen Positionssollwert erhält.

10. Vorrichtung nach einem der Ansprüche 2 bis 9, **dadurch gekennzeichnet, dass** der erste Regelkreis (56) einen Beschleunigungssensor (86) beinhaltet, der ein für die Schwingbewegung (48) repräsentatives Beschleunigungssignal (88) erzeugt, sowie einen zweistufigen Integrator (90, 92), der aus dem Beschleunigungssignal (88) ein Wegsignal erzeugt.

11. Vorrichtung nach Anspruch 10, **dadurch gekennzeichnet, dass** der zweistufige Integrator mit Hilfe von zwei PT₁-Gliedern (90, 92) realisiert ist.

12. Vorrichtung nach einem der Ansprüche 2 bis 11, **dadurch gekennzeichnet, dass** der zweite Regelkreis (58) als Eingangsgröße eine definierte Sollposition (76) erhält.

13. Vorrichtung nach einem der Ansprüche 2 bis 12, **dadurch gekennzeichnet, dass** der zweite Regelkreis (58) einen optischen Positionssensor (10) beinhaltet.

14. Vorrichtung nach einem der Ansprüche 1 bis 13, **dadurch gekennzeichnet, dass** der Rückstellmechanismus ein Federelement (120) mit einer Federkonstanten beinhaltet, die zusammen mit der bewegbaren Masse eine Schwingfrequenz definiert, die klein ist gegenüber den Frequenzen der Schwingbewegung (48).

15. Verfahren zum Bewegen eines Mess- oder Arbeitskopfes mit Hilfe einer Antriebsmechanik (14, 18, 24), insbesondere zum Verfahren eines Tastkopfes (30) an einem Koordinatenmessgerät (10), wobei eine Schwingbewegung (48) des Mess- oder Arbeitskopfes (30) unterdrückt wird, indem eine Masse (38) gegenläufig zu der Schwingbewegung (48) bewegt wird, **dadurch gekennzeichnet, dass** die Masse (38) weitgehend unbedämpft gelagert ist und dass ein Rückstellmechanismus (56;120) vorgesehen ist, der dazu ausgebildet ist, die Masse (38) im Bereich einer Mittelpunktlage (52) zu halten.
